# EUROPÄISCHE PATENTSCHRIFT

(11) **EP 4 165 396 B1**
(45) Veröffentlichungstag und Bekanntmachung des Hinweises auf die Patenterteilung: **24.04.2024**
(21) Anmeldenummer: 21739432.9
(22) Anmeldetag: 07.06.2021
(51) Int. Cl.: G01N 21/77, G01N 21/78, G01N 21/80, G01N 21/27, G01N 21/64

(54) **SENSOREINHEIT, MESSVERFAHREN UND HERSTELLUNGSVERFAHREN**
SENSOR UNIT, MEASURING METHOD AND PRODUCTION METHOD
UNITÉ DE DÉTECTION, PROCÉDÉ DE MESURE ET PROCÉDÉ DE FABRICATION

(30) Priorität: 16.06.2020 DE 102020115791
(43) Veröffentlichungstag der Anmeldung: 19.04.2023
(73) Patentinhaber: PreSens Precision Sensing GmbH, 93053 Regensburg (DE)
(72) Erfinder: RIECHERS, Daniel, 93051 Regensburg (DE)
(74) Vertreter: Reichert & Lindner Partnerschaft Patentanwälte
(86) Internationale Anmeldenummer: PCT/IB2021/054959
(87) Internationale Veröffentlichungsnummer: WO 2021/255574

(56) Entgegenhaltungen:
- US-A- 4 739 645
- US-A1- 2008 152 864

## Beschreibung

Die Erfindung betrifft eine Sensoreinheit zum Messen eines Analyten in einer Probe, ein entsprechendes Messverfahren unter Verwendung der Sensoreinheit und ein Verfahren zur Herstellung der Sensoreinheit.

Der Einsatz von Sensoren zum Nachweis eines Analyten in einer Probe ist bekannt, siehe beispielsweise die deutschen Patentanmeldungen DE 10 2010 061 182 A1, DE 10 2011 055 272 A1, DE 10 2014 107 837 A1 oder das deutsche Patent DE 10 2013 108 659 B3, sowie die darin zitierten Dokumente aus dem Stand der Technik.

Derartige Sensoren beinhalten eine Sensorsubstanz, welche auf einen Analyten der Probe, also einen in der Probe nachzuweisenden Stoff, sensitiv ist. Beispielweise kann die Sensorsubstanz ein optisches Verhalten aufweisen, welches in direkter oder indirekter Weise durch den Analyten beeinflusst wird. Aus der Auswertung des optischen Verhaltens kann quantitativ auf den Analyten geschlossen werden, also beispielsweise je nach Art des Analyten Konzentration oder Partialdruck des Analyten bestimmt werden. Derartige Sensoren, ihr Aufbau, für jeweilige Analyten und Einsatzbedingungen geeignete Sensorsubstanzen und Messverfahren zur Auswertung des optischen Verhaltens des Sensors bzw. der Sensorsubstanz sind dem Fachmann bekannt, zum Beispiel aus dem oben genannten Stand der Technik.

Bei etlichen der Sensoren ist es vor ihrem Einsatz zu einer Messung erforderlich, den Sensor mit einer geeigneten Lösung zu durchfeuchten, um die Einsatzbereitschaft herzustellen. Diese Vorbereitungsphase vor der Messung ist z.B. nachteilig, wenn kurzfristig Messergebnisse erforderlich sind, und allgemein für einen Benutzer umständlich.

Die europäische Patentanmeldung EP 0 354 895 A2 betrifft ein Einweg-Messelement, in dem vor einer Messung ein Sensor in einem Messbereich eines beidseitig verschlossenen Messkanals angeordnet ist. Der Messkanal ist mit einem Kalibrier- und Lagermedium gefüllt. Zur Messung wird das Kalibier- und Lagermedium durch eine in den Messkanal strömende Probe verdrängt. Der Sensor kann ein optischer Sensor sein. Der Verschluss des Messkanals kann durch eine durchstechbare Membran verwirklicht werden. Bei ähnlichem Aufbau wird in der europäischen Patentanmeldung EP 0 460 343 A2 vorgeschlagen, das Lagermedium zunächst durch ein Trennmedium, bei dem es sich um ein Kalibriermedium handeln kann, zu verdrängen, und anschließend das Trennmedium durch die Probe zu verdrängen.

Das deutsche Gebrauchsmuster DE 20 2010 006 207 U1 betrifft verschiedene Anordnungen, mit denen es möglich ist, in einer Messanordnung einen einen Sensor enthaltenden Bereich zumindest zeitweilig von einem Probenbereich zu trennen. Zweck ist, den Sensor während einer Sterilisierung zu schützen. In bestimmten Ausführungen ist der Sensor dabei von einem wässrigen Reduktionsmittel umgeben.

Die US-Patentanmeldung US 2012/0267518 A1 offenbart einen Sensor, der zum Schutz bei einer Sterilisierung in einem Lagerbereich angeordnet ist und aus dem Lagerbereich in einen Probenbereich verschoben werden kann.

US-Patent US 4 739 645 beschreibt ein Gefäß zur Lagerung und Kalibrierung eines Blutgassensors unter sterilen Bedingungen. Das Gefäß umfasst eine optische Faser, an deren Ende ein Sensorelement vorgesehen ist, welches feucht gehalten wird.

Der Schutz bei der Sterilisierung ist ein wichtiger Aspekt bei der Anwendung von Sensoren, vermag aber nicht, das Problem der Wartezeit bis zur Einsatzfähigkeit zu lösen. Die im Stand der Technik hierzu vorgeschlagene Lösung der Lagerung des von einem Lagermedium umgebenen Sensors im Messbereich eines Messkanals erfordert die Anbindung von Behältern oder Leitungen für die Probe an den Messkanal. Dies gestaltet sich in der Handhabung aufwändig.

Aufgabe der Erfindung ist es, eine Sensoreinheit bereitzustellen, bei der der Aufwand für die Durchfeuchtung des Sensors im Vorfeld einer Messung entfällt.

Diese Aufgabe wird gelöst durch eine Sensoreinheit gemäß Anspruch 1. Anspruch 12 betrifft ein entsprechendes Probengefäß, Anspruch 14 ein entsprechendes Messverfahren und Anspruch 15 ein Herstellungsverfahren für eine Sensoreinheit. Die Unteransprüche betreffen jeweils vorteilhafte Ausführungsformen.

Die erfindungsgemäße Sensoreinheit umfasst ein Sensorelement, welches ein optisches Verhalten aufweist, das von mindestens einem Analyten einer Probe abhängt, sowie ein Reservoir mit einem Hilfsmedium. Erfindungsgemäß ist eine Membran vorgesehen, welche in einem Vorbereitungszustand der Sensoreinheit einen diffusiven Kontakt zwischen Hilfsmedium und Sensorelement ermöglicht. Indem das Sensorelement einerseits und die Membran und das Reservoir andererseits voneinander entfernt werden, kann die Sensoreinheit in einen Messzustand versetzt werden.

Im Messzustand der Sensoreinheit ist die Sensoreinheit bereit zur Messung des Analyten. Im Vorbereitungszustand der Sensoreinheit kann die Sensoreinheit gelagert werden; es ist mitunter auch möglich, Prozeduren im Vorfeld einer Messung durchzuführen, etwa eine Sterilisierung der Sensoreinheit bzw. eines Probenbehälters, in dem sich die Sensoreinheit befindet. Das optische Verhalten des Sensorelements, welches von dem mindestens einen Analyten abhängt, ergibt sich etwa daraus, dass im Sensorelement eine Sensorsubstanz der eingangs erwähnten Art enthalten ist. Ohne Beschränkung der Erfindung kann die Sensorsubstanz etwa in einem Träger eingebettet oder auf der Oberfläche eines Trägers aufgebracht sein; der Träger kann beispielsweise aus einem Polymer bestehen. Das optische Verhalten der Sensorsubstanz kann beispielsweise eine Lumineszenz sein. Beispielsweise kann die Sensorsubstanz ein Lumineszenzfarbstoff sein, und es kann etwa eine Intensität des Lumineszenzlichts, eine Abklingdauer der Intensität des Lumineszenzlichts, eine Polarisation des Lumineszenzlichts, eine Abklingdauer der Polarisation des Lumineszenzlichts oder ein anderer Parameter des Lumineszenzlichts direkt oder indirekt von dem Analyten abhängen. Intensität, Abklingdauern, Polarisation oder andere Parameter des Lumineszenzlichts können mit bekannten Methoden gemessen werden. Ein anderes Beispiel für das optische Verhalten einer Sensorsubstanz bzw. des Sensorelements ist die Farbe; d.h. die Farbe des Sensorelements kann direkt oder indirekt von dem Analyten abhängen. Die Farbe kann mit bekannten Methoden gemessen werden. Nichteinschränkende Beispiele für Analyten sind etwa Sauerstoff, Kohlendioxid, pH-Wert.

Im Vorbereitungszustand der erfindungsgemäßen Sensoreinheit ist via die Membran ein diffusiver Kontakt zwischen dem Sensorelement und dem Hilfsmedium im Reservoir gegeben. Auf diese Weise wird das Sensorelement bereits im Vorbereitungszustand, d.h. etwa während der Lagerung der Sensoreinheit, von dem Hilfsmedium durchfeuchtet. Eine Wartezeit oder zusätzliche Schritte direkt vor dem Einsatz der Sensoreinheit vor einer Messung entfallen daher.

Sollte es im Reservoir zum Wachstum von Mikroorganismen kommen, sind bei der erfindungsgemäßen Sensoreinheit kaum Auswirkungen auf eine Messung mit der Sensoreinheit zu besorgen. Denn das gegebenenfalls mit Mikroorganismen kontaminierte Reservoir wird vor der Messung von dem Sensorelement entfernt.

In einer Ausführungsform sind Reservoir und Membran lösbar mit der Sensoreinheit verbunden. Sensorelement einerseits und Membran und Reservoir andererseits können einfach voneinander entfernt werden, indem Reservoir und Membran von der Sensoreinheit abgelöst werden, etwa abgezogen werden.

In einer Weiterbildung dieser Ausführungsform ist eine Kappe vorgesehen, welche das Reservoir und das Sensorelement bedeckt. Diese Kappe schützt die Sensoreinheit während der Lagerung und auch während einer Sterilisierung eines die Sensoreinheit enthaltenden Probengefäßes. In einer noch spezifischeren Ausgestaltung ist das Sensorelement auf einem Träger angeordnet; die Kappe ist lösbar mit dem Träger verbunden, und die Membran ist in der Kappe befestigt und begrenzt zusammen mit der Kappe das Reservoir. In dieser Ausgestaltung können Reservoir und Membran zusammen mit der Kappe einfach vom Träger abgezogen und damit vom Sensorelement entfernt werden.

In einer anderen Ausführungsform weist die Sensoreinheit einen Sensorteil und einen davon verschiedenen Reservoirteil auf. Das Sensorelement ist am Sensorteil angebracht, im Reservoirteil ist das Reservoir ausgebildet und ist die Membran angebracht. Reservoirteil und Sensorteil sind gegeneinander drehbar und/oder verschiebbar. Durch eine entsprechende Drehung bzw. Verschiebung sind Sensorelement einerseits und Membran und Reservoir andererseits voneinander entfernbar.

In einer Weiterbildung weist der Sensorteil einen Kanal auf, in dem ein Lichtleiter geführt werden kann. Der Lichtleiter dient dabei zur Führung von Licht zum Sensorelement und/oder zur Führung von Licht vom Sensorelement weg.

Es ist auch möglich, dass der Reservoirteil eine Öffnung aufweist, durch welche das Sensorelement im Messzustand der Sensoreinheit von einer Umgebung der Sensoreinheit her zugänglich ist. Über diese Öffnung kann das Sensorelement insbesondere in Kontakt mit einer Probe treten, in der ein Analyt gemessen werden soll.

In einer allgemeinen Ausführungsform der erfindungsgemäßen Sensoreinheit ist das Hilfsmedium ein Lagermedium, um das Sensorelement in einem durchfeuchteten Zustand in der Sensoreinheit zu lagern. Das Lagermedium kann beispielsweise Wasser sein oder eine Lauge enthalten, etwa Natronlauge. Eine Lauge kann etwa dazu dienen, Säuren zu neutralisieren, welche bei einer Bestrahlung der Sensoreinheit entstehen können. Eine Bestrahlung der Sensoreinheit kann im Zuge einer Sterilisierung erforderlich sein, die dabei entstehenden Säuren können aber das Sensorelement schädigen; die Neutralisierung dieser Säuren sichert also die Funktionsfähigkeit des Sensorelements trotz Bestrahlung. Auch kann das Lagermedium ein antimikrobielles, vorzugsweise nicht-flüchtiges, Konservierungsmittel enthalten, wie beispielsweise Benzethoniumchlorid. Ein solches Konservierungsmittel unterdrückt das Wachstum von Mikroorganismen im Reservoir und vermeidet so eine Verfälschung von Messergebnissen in Folge der Anwesenheit dieser Mikroorganismen, etwa bedingt durch deren Stoffwechsel, noch zuverlässiger als es, wie oben erläutert, allein durch den Aufbau der Sensoreinheit bereits gegeben ist.

Das Lagermedium wird in Ausführungsformen genutzt, um einen definierten Zustand zur Kalibrierung des Sensorelements festzulegen. Ist, als nichteinschränkendes Beispiel, die Sensoreinheit dazu vorgesehen, den Partialdruck von CO₂ zu messen, so kann man als Lagermedium etwa einen Phosphatpuffer mit einigen Millimol Bikarbonat und exakt eingestelltem pH-Wert verwenden. Ein solcher Puffer ist bestrahlungsstabil und entwickelt einen reproduzierbaren CO₂-Partialdruck. Dieser kann für eine Ein-Punkt-Kalibrierung des Sensorelements verwendet werden.

Ein erfindungsgemäßes Probengefäß weist eine erfindungsgemäße Sensoreinheit wie vorstehend beschrieben auf. Das Probengefäß ist in seiner Form nicht eingeschränkt. Es kann sich um ein Einweg- oder ein Mehrweg-Probengefäß handeln. Als eine unvollständige Auflistung von Beispielen seien etwa genannt Becher, Beutel, Bioreaktoren, Durchflusselemente.

Das Probengefäß kann sterilisiert sein. Da das Sensorelement im Vorbereitungszustand vor Bestrahlung bzw. Bestrahlungsprodukten geschützt ist, kann das Probengefäß mit angebrachter Sensoreinheit durch Bestrahlung sterilisiert werden, ohne das Sensorelement der Sensoreinheit zu beeinträchtigen.

Der Schutz des Sensorelements in der Sensoreinheit erlaubt es auch, bei der Herstellung des Probengefäßes weniger Rücksicht auf die Beeinflussung des Sensorelements durch Materialien des Probengefäßes oder durch Hilfsstoffe wie etwa Klebstoffe zu nehmen. Während der Lagerung des Probengefäßes mit verbauter Sensoreinheit ist das Sensorelement in der Sensoreinheit geschützt, etwa vor Ausdünstungen der Materialien und Hilfsstoffe. Beim Messeinsatz sind solche Ausdünstungen durch die Probe verdrängt.

Ein erfindungsgemäßes Verfahren zur Messung eines Analyten in einer Probe umfasst zumindest die folgenden Schritte:
Zunächst wird ein Probengefäßes mit einer wie vorstehend beschriebenen erfindungsgemäßen Sensoreinheit bereitgestellt. Dann wird das Probengefäß sterilisiert, etwa durch Bestrahlung. Dabei befindet sich die Sensoreinheit noch im Vorbereitungszustand, somit ist das Sensorelement noch geschützt.

Anschließend wird die Sensoreinheit in den Messzustand versetzt, indem Sensorelement einerseits und Reservoir und Membran andererseits voneinander entfernt werden. Das Sensorelement wird dadurch vom Probengefäß aus zugänglich. Ferner wird das Probengefäß mit der Probe befüllt. Es ist dabei in für den Fachmann ersichtlicher Weise von Details der durchgeführten Messung abhängig, ob zuerst die Sensoreinheit in den Messzustand versetzt oder zuerst die Probe in das Probengefäß gefüllt wird; mitunter ist die Reihenfolge dieser beiden Schritte auch beliebig.

Ist die Probe in das Probengefäß gefüllt und die Sensoreinheit in den Messzustand versetzt, wird die Messung des Analyten unter Verwendung des Sensorelements der Sensoreinheit nach einem bekannten Verfahren durchgeführt.

Ein Verfahren zu Herstellung einer Sensoreinheit umfasst zumindest die folgenden Schritte: In einer vorgeschnittenen Folie wird eine Kavität erzeugt. Ein Sensorelement der vorstehend diskutierten Art, das ein von einem Analyten abhängiges optisches Verhalten aufweist, wird auf einem transparenten Träger befestigt. Die Kavität wird mit einem Hilfsmedium befüllt. Eine Membran, durch welche das Hilfsmedium oder Bestandteile davon diffundieren können, wird auf die befüllte Kavität aufgelegt und an der Folie befestigt. Schließlich wird der Träger mit dem Sensorelement auf die Membran aufgelegt; dies geschieht so, dass das Sensorelement zur Membran weist. Der Träger wird an der Folie befestigt.

Nachfolgend werden die Erfindung und ihre Vorteile noch anhand der beigefügten schematischen Zeichnungen näher erläutert.
- **Figur 1**: zeigt eine Ausführungsform einer erfindungsgemäßen Sensoreinheit in Schnittansicht.
- **Figur 2**: zeigt die Ausführungsform der erfindungsgemäßen Sensoreinheit aus Fig. 1 in Draufsicht.
- **Figur 3**: zeigt eine weitere Ausführungsform einer erfindungsgemäßen Sensoreinheit in Schnittansicht im Vorbereitungszustand.
- **Figur 4**: zeigt die Ausführungsform aus Fig. 3 in Schnittansicht im Messzustand.
- **Figur 5**: illustriert die Vorbereitung zu einer Messung anhand einer erfindungsgemäßen Sensoreinheit wie in Figuren 1 und 2 dargestellt.

Die Zeichnungen stellen Ausführungsformen der Erfindung dar, welche zum Zwecke der Erläuterung der Erfindung gezeigt sind, jedoch keinesfalls eine Beschränkung der Erfindung auf die gezeigten Ausführungsbeispiele darstellen.

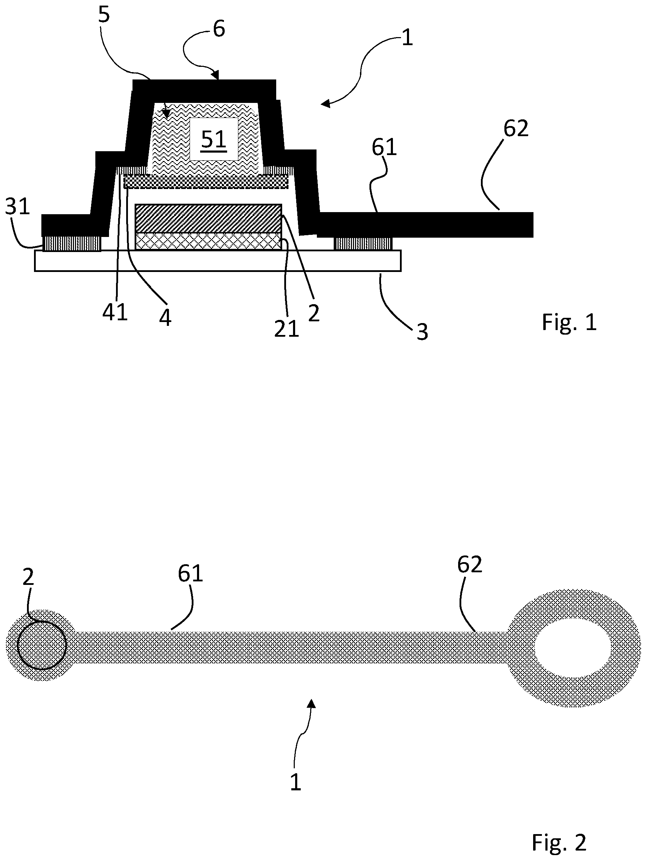

**Fig. 1** zeigt eine Ausführungsform einer erfindungsgemäßen Sensoreinheit 1 in Schnittansicht. Ein Sensorelement 2 ist an einem transparenten Träger 3 befestigt, im gezeigten Beispiel mit einem doppelseitigen Klebeband 21. Über eine Membran 4 steht das Sensorelement 2 in diffusivem Kontakt mit einem Hilfsmedium 51, das sich in einem Reservoir 5 befindet. Das Reservoir 5 wird außer durch die Membran 4 durch eine Kappe 6 begrenzt, welche hier als Kavität in einer Folie 61 gebildet ist. Die Folie 61 läuft in einem Handgriff 62 aus, der hier nur teilweise gezeigt ist. Die Membran 4 ist durch einen Schweißring 41 an der Folie 61 befestigt. Ferner ist die Folie 61 über einen Schweißring 31 an dem Träger 3 befestigt. Im dargestellten Zustand befindet sich die Sensoreinheit 1 im Vorbereitungszustand. Durch die Kappe 6 ist das Sensorelement 2 geschützt, insbesondere bei Bestrahlung zum Zwecke der Sterilisierung. Der durch die Membran 4 gegebene diffusive Kontakt zwischen Hilfsmedium 51 und Sensorelement 2 sorgt für eine Durchfeuchtung des Sensorelements 2 im Vorbereitungszustand, in welchem die Sensoreinheit 1 etwa gelagert werden kann.

Die Folie 61 kann etwa eine Aluminiumfolie oder eine Kunststoff-Aluminium-Kompositfolie sein; als Kunststoff eignet sich beispielsweise Polyethylen geringer Dichte (LDPE). Der Träger 3 kann beispielsweise aus einem Cycloolefin-Copolymer (COC) sein. Die Membran 4 kann beispielsweise mikroporöses Polypropylen (PP) sein.

Der transparente Träger 3 erlaubt es, Licht durch den Träger 3 zum Sensorelement 2 zu führen und/oder Licht vom Sensorelement 2 durch den Träger 3 hindurch zum Zwecke der Auswertung des optischen Verhaltens des Sensorelements 2 zu erfassen. Dies impliziert, dass "transparent" hier bedeutet, dass der Träger 3 in einem Ausmaß durchlässig für die dabei relevanten Lichtwellenlängen ist, dass die Messung des Analyten mit einer gewünschten Genauigkeit möglich ist. Im gleichen Sinne muss dann auch das Klebeband 21 transparent sein.

In der Darstellung ist die Membran 4 über Schweißring 41 an der Folie 61 befestigt. Es wäre beispielsweise auch denkbar, die Membran 4 mittels eines Klemmrings zu befestigen, wobei dann der Klemmring an der Folie 61 befestigt ist, z.B. über einen Schweißring.

Fig. 2 zeigt eine Draufsicht auf die in Fig. 1 gezeigte Sensoreinheit 1. Hier ist der Handgriff 62 vollständig gezeigt. Das Sensorelement 2 ist durch einen Kreis angedeutet. Mit dem Handgriff 62 kann, vgl. Fig. 1, die Kappe 6 samt Reservoir 5 und Membran 4 vom Träger 3 abgezogen werden, dabei löst sich die durch den Schweißring 31 gegebene Verbindung, genauer löst sich der Schweißring 31 vom Träger 3 und verbleibt an der Folie 61, während die durch den Schweißring 41 gegebene Verbindung bestehen bleibt; das Sensorelement 2 ist dann von außerhalb der Sensoreinheit 1 zugänglich. Damit ist die Sensoreinheit 1 in den Messzustand versetzt.

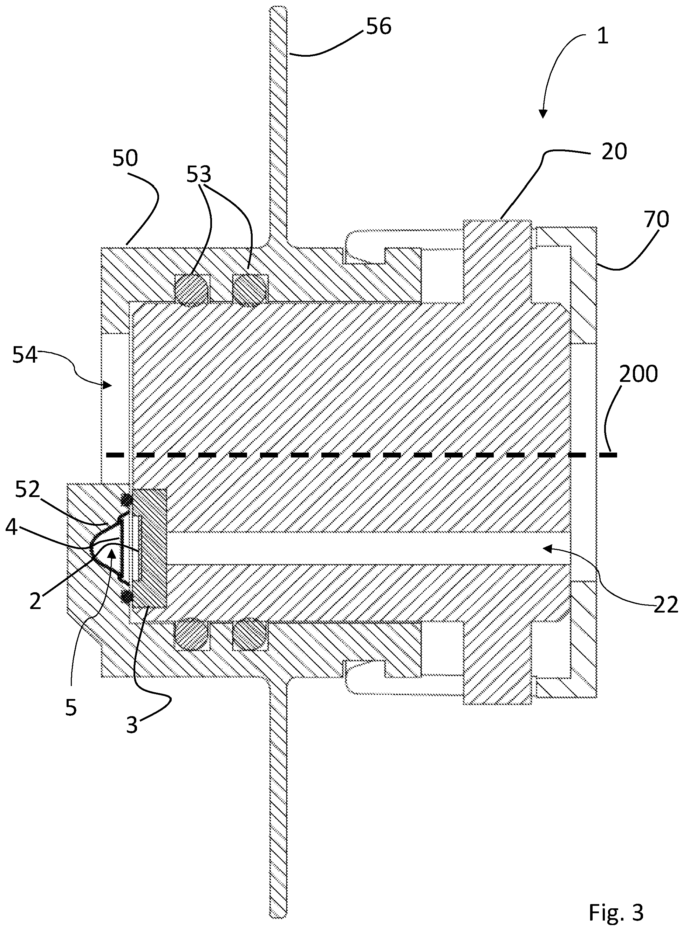

**Fig. 3** zeigt in Schnittansicht eine weitere Ausführungsform der erfindungsgemäßen Sensoreinheit 1. Die Sensoreinheit 1 ist im Vorbereitungszustand gezeigt. Die Sensoreinheit 1 umfasst einen Sensorteil 20, an welchem das Sensorelement 2 angebracht ist, hier mittels eines Trägers 3. Die Sensoreinheit 1 umfasst ferner einen Reservoirteil 50, in dem das Reservoir 5 ausgebildet ist. Das Reservoir 5 ist auf einer Seite durch die ebenfalls am Reservoirteil 50 angebrachte Membran 4 begrenzt, ansonsten durch eine metallisierte Folie 52; die Folie 52 wirkt als Diffusionsbarriere. Im Sensorteil 20 ist ein Kanal 22 für einen Lichtleiter ausgebildet. Über den Kanal 22 kann ein Lichtleiter an den Träger 3 herangeführt werden, um durch den Lichtleiter und über den Träger 3 Licht zu dem Sensorelement 2 zu leiten und/oder Licht von dem Sensorelement 2 weg zu führen. Dies dient der Erfassung des optischen Verhaltens der Sensorsubstanz im Sensorelement 2. Der Reservoirteil 50 weist ferner eine Öffnung 54 auf, durch welche im Messzustand ein Kontakt zwischen einer Probe und dem Sensorelement 2 möglich ist. Im gezeigten Vorbereitungszustand besteht durch die Membran 4 ein diffusiver Kontakt zwischen dem Sensorelement 2 und dem Reservoir 5, so dass das Hilfsmedium (hier nicht gezeigt) im Reservoir 5 oder Komponenten davon durch Diffusion durch die Membran 4 hindurch zum Sensorelement 2 gelangen können.

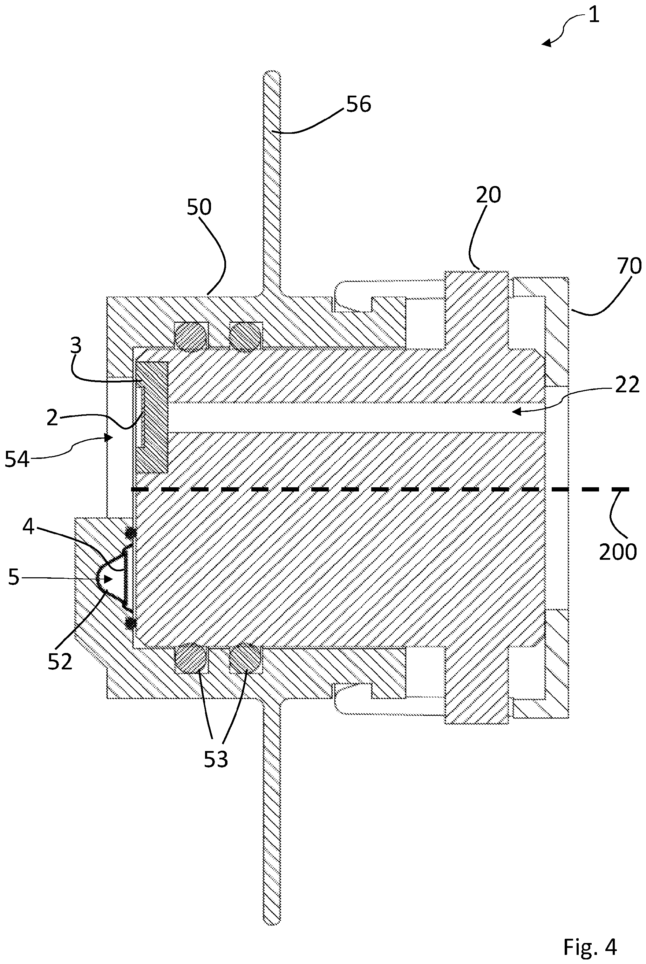

Sensorteil 20 und Reservoirteil 50 sind gegeneinander drehbar um eine Achse 200; durch eine solche Drehung kann die Sensoreinheit 1 in den in Fig. 4 dargestellten Messzustand versetzt werden. Sensorteil 20 und Reservoirteil 50 sind durch O-Ringe 53 gegeneinander abgedichtet. Flansch 56 am Reservoirteil 50 dient zur Befestigung der Sensoreinheit 1 an einem Probengefäß. Je nach Ausgestaltung von Probengefäß und Sensoreinheit 1 kann diese Befestigung unterschiedlich erfolgen. Handelt es sich beispielsweise beim Probengefäß um einen Beutel aus Kunststoff und ist der Flansch 56 ebenfalls aus Kunststoff, so können Beutel und Flansch verschweißt oder auch verklebt werden. Hat das Probengefäß eine festere Wandung, so kann der Flansch beispielsweise durch eine Verschraubung oder über einen Bajonettverschluss mit der Wandung verbunden werden. Eine Halteklammer 70 sorgt in der gezeigten Ausführungsform für den Zusammenhalt von Reservoirteil 50 und Sensorteil 20.

**Fig. 4** zeigt die Sensoreinheit 1 aus Fig. 3 im Messzustand. Alle dargestellten Elemente wurden bereits zu Fig. 3 diskutiert. Hier kann nun eine Probe durch Öffnung 54 zum Sensorelement 2 gelangen. Hingegen besteht kein diffusiver Kontakt mehr zwischen dem Reservoir 5 und dem Sensorelement 2.

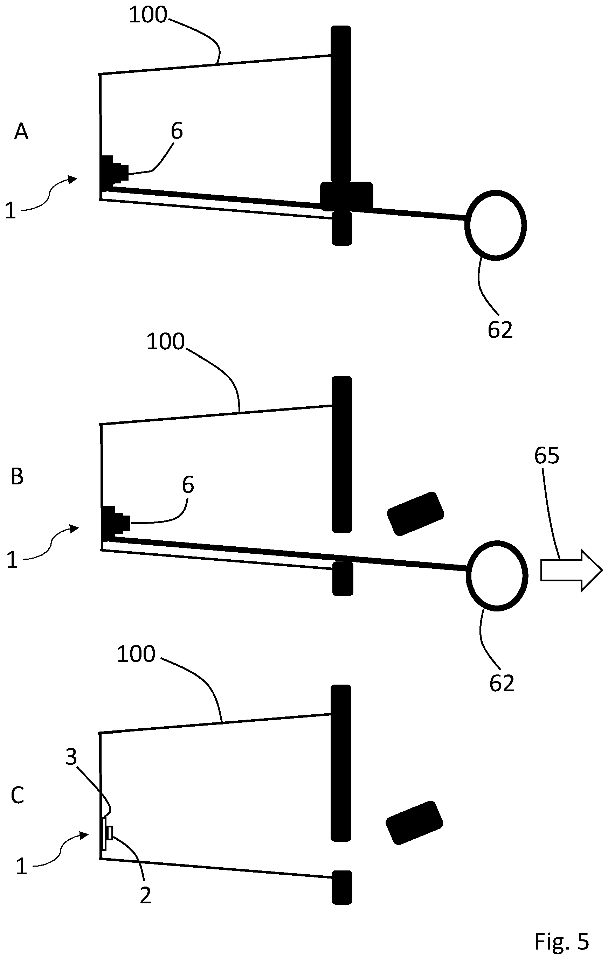

**Fig. 5** zeigt eine Abfolge von drei Stadien A, B, C vor einer Messung mit einer erfindungsgemäßen Sensoreinheit 1. Die Sensoreinheit 1, die einer in Figuren 1 und 2 gezeigten Ausführungsform entspricht, ist hier in ein Probengefäß 100 eingesetzt, etwa am Boden des Probengefäßes 100 festgeklebt. Im Stadium A bedeckt Kappe 6 Sensorelement und Reservoir (hier nicht gezeigt, siehe Figuren 1 und 2), und der Handgriff 62 ist abgewinkelt und aus dem Probengefäß 100 geführt. In diesem Zustand kann das Probengefäß 100 samt Sensoreinheit 1 zum Zwecke der Sterilisierung bestrahlt werden, das Sensorelement ist durch die Kappe 6 geschützt. Das Probengefäß 100 samt Sensoreinheit 1 kann so auch gelagert werden. In Stadium B wird durch eine Kraft 65 auf den Handgriff 62 die Kappe 6 samt Reservoir und Membran (siehe Figuren 1 und 2) von der Sensoreinheit 1 abgezogen, man gelangt so zum Stadium C. Im Stadium C ist das auf Träger 3 befestigte Sensorelement 2 vom Inneren des Probengefäßes 100 her zugänglich. Das Probengefäß 100 kann nun mit einer Probe befüllt werden. Anschließend kann die Messung unter Verwendung des Sensorelements 2 durchgeführt werden.

### Bezugszeichenliste:

- 1: Sensoreinheit
- 2: Sensorelement
- 3: Träger
- 4: Membran
- 5: Reservoir
- 6: Kappe / Kavität
- 20: Sensorteil
- 21: doppelseitiges Klebeband
- 22: Kanal
- 31: Schweißring
- 41: Schweißring
- 50: Reservoirteil
- 51: Hilfsmedium
- 52: metallisierte Folie
- 53: O-Ring
- 54: Öffnung
- 56: Flansch
- 61: Folie
- 62: Handgriff
- 65: Kraft
- 70: Halteklammer
- 100: Probengefäß
- 200: Achse

## Patentansprüche

1. Sensoreinheit (1) umfassend:
ein Sensorelement (2), welches ein optisches Verhalten aufweist, das von mindestens einem Analyten einer Probe abhängt;
ein Reservoir (5) mit einem Hilfsmedium (51);
**dadurch gekennzeichnet, dass**
eine Membran (4) vorgesehen ist, welche in einem Vorbereitungszustand der Sensoreinheit (1) einen diffusiven Kontakt zwischen Hilfsmedium (51) und Sensorelement (2) ermöglicht, und dass
die Sensoreinheit (1) in einen Messzustand versetzbar ist, durch das Entfernen voneinander des Sensorelements (2) einerseits und der Membran (4) und des Reservoirs (5) andererseits.

2. Sensoreinheit (1) nach Anspruch 1, wobei Reservoir (5) und Membran (4) lösbar mit der Sensoreinheit (1) verbunden sind.

3. Sensoreinheit (1) nach Anspruch 2, wobei eine Kappe (6) vorgesehen ist, welche das Reservoir (5) und das Sensorelement (2) bedeckt.

4. Sensoreinheit (1) nach Anspruch 3, wobei das Sensorelement (2) auf einem Träger (3) angeordnet ist, die Kappe (6) lösbar mit dem Träger (3) verbunden ist, und die Membran (4) in der Kappe (6) befestigt ist.

5. Sensoreinheit (1) nach Anspruch 1, wobei die Sensoreinheit (1) einen Sensorteil (20) aufweist, an dem das Sensorelement (2) angebracht ist, und einen Reservoirteil (50) aufweist, in welchem das Reservoir (5) ausgebildet und die Membran (4) angebracht ist, und wobei Reservoirteil (50) und Sensorteil (20) gegeneinander drehbar und/oder verschiebbar sind.

6. Sensoreinheit (1) nach Anspruch 5, wobei der Sensorteil (20) einen Kanal (22) zur Führung eines Lichtleiters aufweist.

7. Sensoreinheit (1) nach Anspruch 5 oder 6, wobei der Reservoirteil (50) eine Öffnung (54) aufweist, durch welche das Sensorelement (2) im Messzustand der Sensoreinheit (1) von einer Umgebung der Sensoreinheit (1) her zugänglich ist.

8. Sensoreinheit (1) nach einem der vorhergehenden Ansprüche, wobei das Hilfsmedium (51) ein Lagermedium ist, um das Sensorelement (2) in einem durchfeuchteten Zustand in der Sensoreinheit (1) zu lagern.

9. Sensoreinheit (1) nach Anspruch 8, wobei das Lagermedium (51) Wasser ist oder eine Lauge enthält.

10. Sensoreinheit (1) nach Anspruch 8 oder 9, wobei das Lagermedium (51) ein antimikrobielles Konservierungsmittel enthält.

11. Sensoreinheit (1) nach Anspruch 8, wobei das Lagermedium (51) einen definierten Zustand zur Kalibrierung des Sensorelements (2) festlegt.

12. Probengefäß (100) mit einer Sensoreinheit (1) gemäß einem der Ansprüche 1 bis 11.

13. Probengefäß (100) nach Anspruch 12, wobei das Probengefäß (100) sterilisiert ist.

14. Verfahren zur Messung eines Analyten in einer Probe, umfassend zumindest die folgenden Schritte:
Bereitstellen eines Probengefäßes (100) mit einer Sensoreinheit (1) nach einem der Ansprüche 1 bis 11;
Sterilisieren des Probengefäßes (100);
Entfernen von Sensorelement (2) einerseits und Reservoir (5) und Membran (4) andererseits voneinander, um das Sensorelement (2) vom Probengefäß (100) aus zugänglich zu machen;
Befüllen des Probengefäßes (100) mit der Probe;
Durchführen der Messung des Analyten unter Verwendung des Sensorelements (2) der Sensoreinheit (1).

15. Verfahren zur Herstellung einer Sensoreinheit (1), umfassend zumindest die Schritte:
Erzeugen einer Kavität (6) in einer vorgeschnittenen Folie (61);
Befestigen eines Sensorelements (2), das ein von einem Analyten abhängiges optisches Verhalten aufweist, auf einem transparenten Träger (3);
Befüllen der Kavität (6) mit einem Hilfsmedium (51);
Auflegen einer Membran (4), die für das Hilfsmedium (51) diffusiv ist, auf die befüllte Kavität (6) und Befestigen der Membran (4) an der Folie (61);
Auflegen des Trägers (3) mit dem Sensorelement (2) auf die Membran (4), so dass das Sensorelement (2) zur Membran (4) weist, um in Kontakt mit durch die Membran diffundiertem Hilfsmedium zu treten; und
Befestigen des Trägers (3) an der Folie (61) derart, dass sich die Folie (61) zusammen mit Membran (4) und Kavität (6) mit Hilfsmedium (51) vom Träger (3) mit dem Sensorelement (2) entfernen lässt.

## Claims

1. Sensor unit (1) comprising:
a sensor element (2) which has an optical behaviour which depends on at least one analyte of a sample;
a reservoir (5) with an auxiliary medium (51);
**characterised in that**
a membrane (4) is provided which, in a preparatory state of the sensor unit (1), enables a diffusive contact between the auxiliary medium (51) and the sensor element (2), and **in that**
the sensor unit (1) can be set to a measuring state, on the one hand by removing the sensor element (2) and on the other hand the membrane (4) and the reservoir (5) from one another.

2. Sensor unit (1) according to claim 1, wherein the reservoir (5) and the membrane (4) are detachably connected to the sensor unit (1).

3. Sensor unit (1) according to claim 2, wherein a cap (6) is provided which covers the reservoir (5) and the sensor element (2).

4. Sensor unit (1) according to claim 3, wherein the sensor element (2) is arranged on a carrier (3), the cap (6) is detachably connected to the carrier (3), and the membrane (4) is fastened in the cap (6).

5. Sensor unit (1) according to claim 1, wherein the sensor unit (1) has a sensor part (20), to which the sensor element (2) is attached, and a reservoir part (50), in which the reservoir (5) is formed and the membrane (4) is attached, and wherein the reservoir part (50) and the sensor part (20) are rotatable and/or displaceable relative to one another.

6. Sensor unit (1) according to claim 5, wherein the sensor part (20) has a channel (22) for guiding an optical fibre.

7. Sensor unit (1) according to claim 5 or 6, wherein the reservoir part (50) has an opening (54) through which the sensor element (2) is accessible from an environment of the sensor unit (1) in the measuring state of the sensor unit (1).

8. Sensor unit (1) according to any one of the preceding claims, wherein the auxiliary medium (51) is a storage medium for storing the sensor element (2) in a soaked state in the sensor unit (1).

9. Sensor unit (1) according to claim 8, wherein the storage medium (51) is water or contains an alkaline solution.

10. Sensor unit (1) according to claim 8 or 9, wherein the storage medium (51) contains an antimicrobial preservative.

11. Sensor unit (1) according to claim 8, wherein the storage medium (51) establishes a defined state for calibrating the sensor element (2).

12. Sample vessel (100) with a sensor unit (1) according to any one of claims 1 to 11.

13. Sample vessel (100) according to claim 12, wherein the sample vessel (100) is sterilized.

14. Method of measuring an analyte in a sample, comprising at least the following steps:
providing a sample vessel (100) with a sensor unit (1) according to any one of claims 1 to 11;
sterilizing the sample vessel (100);
removing the sensor element (2) on the one hand and the reservoir (5) and the membrane (4) on the other hand from each other in order to make the sensor element (2) accessible from the sample vessel (100);
filling the sample vessel (100) with the sample;
performing the measurement of the analyte using the sensor element (2) of the sensor unit (1).

15. Method of producing a sensor unit (1), comprising at least the steps of:
creating a cavity (6) in a pre-cut film (61);
mounting a sensor element (2), which has an optical behaviour dependent on an analyte, on a transparent carrier (3);
filling the cavity (6) with an auxiliary medium (51);
placing a membrane (4), which is diffusive for the auxiliary medium (51), on the filled cavity (6) and fastening the membrane (4) to the film (61);
placing the support (3) with the sensor element (2) on the membrane (4) so that the sensor element (2) faces the membrane (4) to come into contact with auxiliary medium diffused through the membrane; and
fastening the carrier (3) to the film (61) in such a way that the film (61) together with the membrane (4) and the cavity (6) with auxiliary medium (51) can be removed from the carrier (3) with the sensor element (2).

## Revendications

1. Unité de détection (1) comprenant
un élément de détection (2) qui présente un comportement optique qui dépend d'au moins un analyte d'un échantillon ;
un réservoir (5) contenant un milieu auxiliaire (51) ;
**caractérisé en ce que**
il est prévu une membrane (4) qui, dans un état de préparation de l'unité de détection (1), permet un contact diffusif entre le milieu auxiliaire (51) et l'élément de détection (2), et **en ce que**
l'unité de détection (1) peut être mise dans un état de mesure en enlevant l'un de l'autre l'élément de détection (2) d'une part et la membrane (4) et le réservoir (5) d'autre part.

2. Unité de détection (1) selon la revendication 1, dans laquelle le réservoir (5) et la membrane (4) sont reliés de manière amovible à l'unité de détection (1).

3. Unité de détection (1) selon la revendication 2, dans laquelle il est prévu un capuchon (6) qui recouvre le réservoir (5) et l'élément de détection (2).

4. Unité de détection (1) selon la revendication 3, dans laquelle l'élément de détection (2) est disposé sur un support (3), le capuchon (6) est relié de manière amovible au support (3), et la membrane (4) est fixée dans le capuchon (6).

5. Unité de détection (1) selon la revendication 1, dans laquelle l'unité de détection (1) présente une partie de capteur (20), sur laquelle l'élément de détection (2) est monté, et une partie de réservoir (50), dans laquelle le réservoir (5) est formé et la membrane (4) est montée, et dans laquelle la partie de réservoir (50) et la partie de capteur (20) peuvent tourner et/ou coulisser l'une par rapport à l'autre.

6. Unité de détection (1) selon la revendication 5, dans laquelle la partie de capteur (20) présente un canal (22) pour le guidage d'un guide de lumière.

7. Unité de détection (1) selon la revendication 5 ou 6, dans laquelle la partie de réservoir (50) présente une ouverture (54) à travers laquelle l'élément de détection (2) est accessible depuis un environnement de l'unité de détection (1) dans l'état de mesure de l'unité de détection (1).

8. Unité de détection (1) selon l'une des revendications précédentes, dans laquelle le milieu auxiliaire (51) est un milieu de stockage pour stocker l'élément de détection (2) dans un état humidifié dans l'unité de détection (1).

9. Unité de détection (1) selon la revendication 8, dans laquelle le milieu de stockage (51) est de l'eau ou contient une lessive.

10. Unité de détection (1) selon la revendication 8 ou 9, dans laquelle le milieu de stockage (51) contient un conservateur antimicrobien.

11. Unité de détection (1) selon la revendication 8, dans laquelle le milieu de stockage (51) détermine un état défini pour le calibrage de l'élément de détection (2).

12. Récipient d'échantillon (100) avec une unité de détection (1) selon l'une des revendications 1 à 11.

13. Récipient d'échantillon (100) selon la revendication 12, dans lequel le récipient d'échantillon (100) est stérilisé.

14. Procédé de mesure d'un analyte dans un échantillon, comprenant au moins les étapes suivantes :
fournir un récipient d'échantillon (100) avec une unité de détection (1) selon l'une des revendications 1 à 11 ;
stériliser le récipient d'échantillon (100) ;
enlever l'un de l'autre l'élément de détection (2) d'une part et le réservoir (5) et la membrane (4) d'autre part, afin de rendre l'élément de détection (2) accessible depuis le récipient d'échantillon (100) ;
remplir le récipient d'échantillon (100) avec l'échantillon ;
effectuer la mesure de l'analyte en utilisant l'élément de détection (2) de l'unité de détection (1).

15. Procédé de fabrication d'une unité de détection (1), comprenant au moins les étapes suivantes :
créer une cavité (6) dans une feuille prédécoupée (61) ;
fixer sur un support transparent (3) un élément de détection (2) qui présente un comportement optique dépendant d'un analyte ;
remplir la cavité (6) avec un milieu auxiliaire (51) ;
mettre en place une membrane (4), qui est diffusante pour le milieu auxiliaire (51), sur la cavité remplie (6) et fixer la membrane (4) à la feuille (61) ;
placer le support (3) avec l'élément de détection (2) sur la membrane (4) de telle sorte que l'élément de détection (2) soit dirigé vers la membrane (4) pour entrer en contact avec le milieu auxiliaire diffusé à travers la membrane ; et
fixer le support (3) à la feuille (61) de telle sorte que la feuille (61) puisse être retirée, avec la membrane (4) et la cavité (6) contenant le milieu auxiliaire (51), du support (3) avec l'élément de détection (2).
